# EUROPEAN PATENT SPECIFICATION

(11) **EP 1 843 910 B1**
(45) Date of publication and mention of the grant of the patent: **29.06.2016**
(21) Application number: 05850741.9
(22) Date of filing: 21.12.2005
(51) Int. Cl.: B60J 10/00, B60J 10/79

(54) **SEALING OR GUIDING ASSEMBLIES AND METHODS OF MAKING THEM**
DICHTUNG ODER FÜHRUNGSEINRICHTUNG UND VERFAHREN ZUR DESSEN HERSTELLUNG
JOINTS ETANCHES ET GLISSIERES ET LEURS PROCEDES D'OBTENTION

(30) Priority: 23.12.2004 GB 0428265; 13.07.2005 GB 0514408
(43) Date of publication of application: 17.10.2007
(73) Proprietor: Henniges Automotive Sealing Systems North America, Inc., Dover, DE 19901 (US)
(72) Inventor: JANISCH, Karl-Detlef, 31634 Steimbke (DE)
(74) Representative: Foster, Mark Charles
(86) International application number: PCT/IB2005/003997
(87) International publication number: WO 2006/067622

(56) References cited:
- EP-A- 0 792 766
- WO-A-2004/030965
- US-A- 4 653 230
- PATENT ABSTRACTS OF JAPAN vol. 2000, no. 20, 10 July 2001 (2001-07-10) -& JP 2001 071752 A (SHIROKI CORP), 21 March 2001 (2001-03-21)

## Description

### Field of the Invention

The present invention relates to sealing, guiding or trimming assemblies for sealing a closure member, such as a window pane in a vehicle door, to a vehicle door including a slidable closure member, a fixed closure member and such an assembly, and to a method of making such an assembly, as e.g. described in WO2004/030965 A.

### Background Art

EP-A-1145889 discloses a sealing, guiding or trimming assembly for sealing a closure member. This assembly forms a cross-piece between the larger sliding window pane and the smaller fixed window pane (quarter light) of a vehicle door. The assembly comprises a division pillar visible from the exterior of the vehicle within which a rigid, generally T-shaped division bar is embedded. The fixed window pane is bonded to the division pillar. A sealing profile is mechanically coupled to the division pillar and division bar and slidably receives the moving window pane. The material of the sealing profile abuts the material of the division pillar. Disadvantageously, sometimes a gap between the material of the sealing profile and the material of the division pillar will be visible, particularly as the materials age. Also, disadvantageously, the mechanical interlocking of the sealing profile with the division bar requires complex formations of both the sealing profile and the division bar.

### Brief Summary of the Invention

According to a first aspect of the present invention, there is provided a sealing, guiding or trimming assembly for sealing a closure member, the assembly including an unreinforced extruded part for sealing against a surface of the closure member; a reinforcing member in which said extruded part is at least partially accommodated; and a moulded part moulded at least partly over said reinforcing member, the moulded part being moulded onto the extruded part.

The invention also provides a vehicle door including such an assembly.

The invention also provides a sealing, guiding or trimming arrangement for sealing around a fixed closure member and a slidable closure member mounted in a vehicle door.

According to a second aspect of the present invention, there is provided a method of forming a sealing, guiding or trimming assembly for sealing a closure member, the method including providing an unreinforced extruded part for sealing against a surface of the closure member; mounting the extruded part in a reinforcing member; and moulding a moulded part at least partly over the reinforcing member, the moulded part being moulded onto the extruded part.

According to a third aspect of the present invention, there is provided a window sealing and guiding arrangement for supporting the edges of, and separating, two substantially parallel and aligned window panes, comprising longitudinally extending flexible material having a central longitudinally extending portion from which integrally extend in opposite perpendicular directions first and second side portions which define first and second longitudinally extending parallel channels respectively facing in the said opposite directions for respectively receiving the edges of the window panes, each said side portion comprising two wall parts each forming one of the walls of the channel of that side portion, at least one wall part being aligned with the corresponding wall part of the other side portion and with an intervening part of the central portion; and a longitudinally extending reinforcing member coupled to the flexible material, one portion thereof extending along one wall part of the first side portion, along the corresponding wall part of the second side portion and along the intervening part of the central portion, and the other portion thereof being embedded in the other wall part of the first side portion, wherein the sealing and guiding arrangement includes a channel-shaped extruded part which is accommodated in the part of the reinforcing member which extend along said one wall part of the first side portion, along said corresponding wall part of the second side portion and along the intervening part of the central portion, and wherein the extruded part is moulded onto the remainder of the sealing and guiding arrangement.

### Brief Description of the Drawings

Sealing, guiding or trimming assemblies, vehicle doors incorporating such assemblies and a method of making such assemblies will now be described by way of example, with reference to the accompanying drawings, in which:
Figure 1 is a side view of a motor vehicle body incorporating a sealing, guiding or trimming assembly;
Figure 2 is a cross-section on the line II-II of Figure 1 showing the form of a prior art cross-piece;
Figure 3 is a cross-section on the line II-II of Figure 1 showing the form of a cross-piece in accordance with a first embodiment of the present invention;
Figure 4 is a cross-section on the line II-II of Figure 1 showing the form of a cross-piece in accordance with a second embodiment of the invention;
Figure 5 is a side view of a complete window seal arrangement incorporating a sealing, guiding or trimming assembly in accordance with the invention;
Figures 6,7,8 and 9 are cross-sections on the lines V-V, VI-VI,VII-VII and VIII-VIII respectively, of Figure 5; and
Figures 10 and 11 are cross-sectional views of an alternative glass run arrangement for the C-pillar.

In the drawings like elements are generally designated with the same reference numerals.

### Detailed Description of Embodiments of the Invention

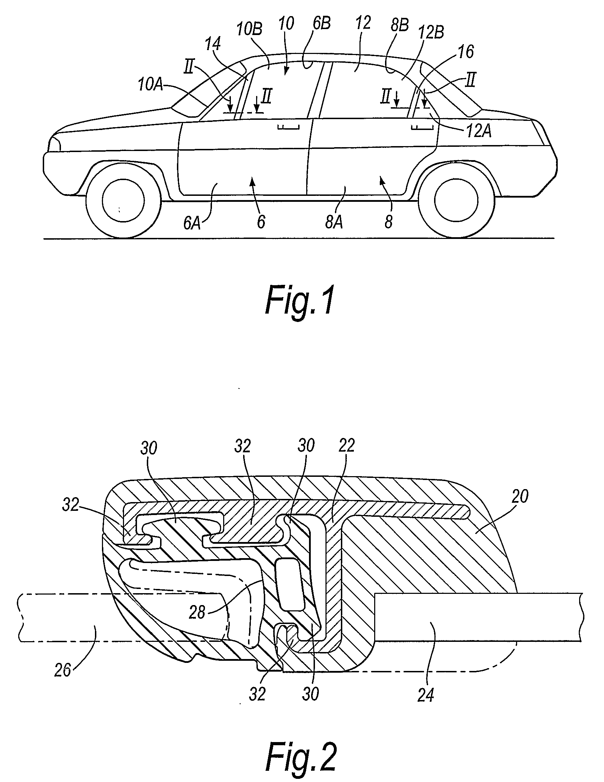

The motor vehicle 5 shown in Figure 1 has doors 6 and 8, each having a closed-off hollow lower part 6A,8A and carrying a window frame 6B,8B defining a window opening 10,12.

As part of each window frame 6B,8B, there is provided a cross-piece 14,16. The cross-pieces 14,16 each divide the respective window openings into a small part 10A,12A and a large part 10B,12B. The window glass within each small part is fixed but the window glass within each large part is raisable and lowerable.

As briefly described above, the form of a prior art cross-piece of EP-A-1145889 is shown in Figure 2. The main part of the cross-piece is a division pillar 20 within which is embedded a generally T-shaped rigid division bar 22. The window glass 24 of the small window opening 12A (the quarter light) is bonded to the division pillar 20. The window glass 26 of the larger window opening 12B is slidably received in a sealing profile 28. This sealing profile 28 includes engagement formations 30 for mechanical interlocking with corresponding engagement formations 32 of the division bar 22. As can be seen, these formations 30,32 have a complex structure, which may be difficult to manufacture and may also make mounting of the sealing profile 28 to the division bar 22 difficult. Further, where the material of the sealing profile 28 abuts the material of the division pillar 20 any gap therebetween will detract from the pleasing visual appearance of the cross-piece. Such a gap may form when the material of the sealing profile 28 and the material of the division pillar 20 ages and perhaps shrinks or becomes brittle.

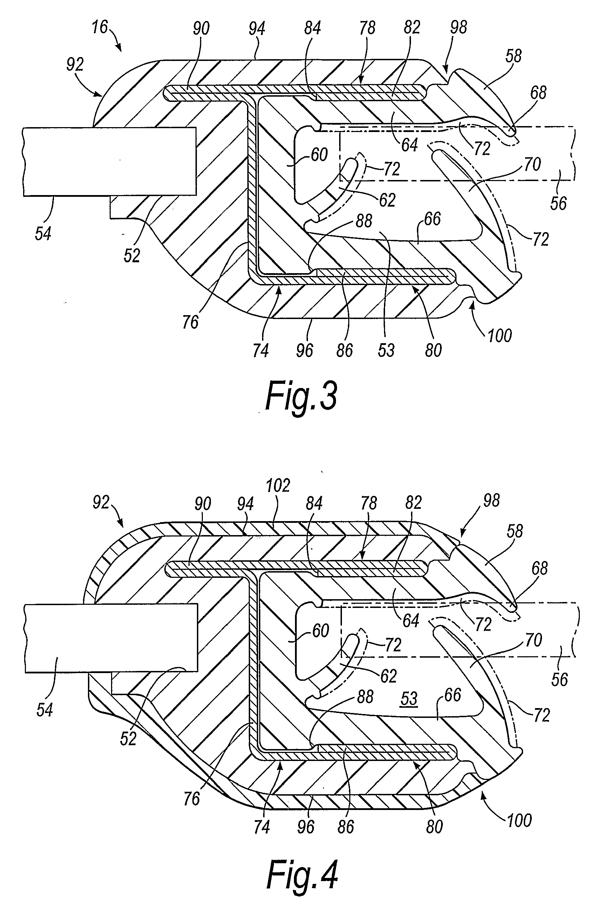

Figure 3 shows a cross-piece 16 in accordance with a first embodiment of the invention. The cross-piece 14 maybe similarly constructed.

The cross-piece 16 provides two oppositely facing channels 52 and 53. The first channel 52 receives fixed window pane 54 which closes the small window opening 12A. The window pane 54 is the rear quarter light window. The second channel 54 receives the slidable window glass 56 which closes the large window opening 12B.

The second channel 53 is formed by an extruded sealing profile 58. The channel of the sealing profile 58 comprises a base 60 from which a first sealing lip 62 extends for abutting the edge of the window pane 56. Oppositely facing walls 64,66 integrally extend from the base 60 and terminate at the mouth of the channel in integrally formed oppositely facing sealing lips 68,70. The larger sealing lip 70 extends from the lower (in the Figure) wall 66 for sealing against the lower (in the Figure) surface of the window glass 56. The upper (in the Figure) sealing lip 68 extends from the wall 64 for sealing against the upper (in the Figure) surface of the window pane 56. Advantageously, the sealing lips 62,68,70 and the wall 64 have flocked surfaces 72 where they contact the window pane 56. The flocked surfaces 72 can be formed during the extrusion process that forms the extruded sealing profile 58. The sealing profile 58 may be formed from EPDM or TPE, for example.

The sealing profile 58 is unreinforced; that is, it does not include any metal or other relatively rigid reinforcement embedded therein. This facilitates opening the mouth of the sealing profile 58 to apply the flocked surfaces 72.

The cross-piece 16 further comprises a division bar 74 formed of rigid material such as hard rubber, metal or plastics (for example TPE or EPDM). The division bar 74 may be formed of a single sheet of material which is folded into the shape shown in Figure 3. The division bar 74 includes a generally planar base member 76 for abutting the base 60 of the sealing profile 58. Extending generally perpendicularly to the base member 76 are generally parallelly extending upper and lower (in the Figures) wall members 78 and 80. Wall member 78 extends along approximately three quarters of the length of the upper wall 64 of the sealing profile 58. The wall member 78 includes an increased thickness portion 82 (for example, formed by folding over the end of the sheet of material forming the division bar 74). This increased thickness portion 82 is accommodated in a generally rectangular in cross-section recess 84 formed in the outer surface of the wall 64. The lower wall member 80 is longer than the upper wall member 78 and extends along the majority of the length of the wall 66 of the sealing profile 58. Like the upper wall member 78, the lower wall member 80 includes an increased thickness portion 86 which is accommodated in a generally rectangular in cross-section recess 88 formed in the outer surface of the wall 66 of the sealing profile 58. The increased thickness portions 82,86 and the corresponding recesses 84 and 88 serve to assist in locating the sealing profile 58 within the division bar 74.

An extension 90 of the upper wall member 78 of the division bar 74 extends from the opposite side of the base member 76, forming a flange.

The main part of the cross-piece 16 comprises division pillar 92. The upper surface (in the Figure) 94 of the division pillar is visible from the exterior of the vehicle, and the lower surface 96 may be visible from the interior of the vehicle. The division pillar may be formed by moulding. The material of the division pillar 92 may be TPE or EPDM. The division pillar may be formed of the same type of material as the sealing profile 58. The division pillar 92 forms the generally U-shaped recess 52 within which the window pane 54 is fixed and the larger, oppositely facing, generally U-shaped recess within which the sealing profile is accommodated.

Preferably, the cross-piece 16 is formed by the following steps:
1. The sealing profile 58 is formed by an extrusion die and cut to an appropriate length.
2. The division bar 74 is formed into the shape shown and cut to a suitable length if necessary.
3. The extruded sealing profile 58 is mounted in the division bar 74. The assembled sealing profile 58 and division bar 74 are then placed in a mould together with appropriately positioned window pane 54.
4. TPE or EPDM material for forming the division pillar 92 is then supplied to the mould to form the division pillar 92 having the shape shown in Figure 3. The moulding process forms the recess 52, moulding the material of the division pillar 92 to the window pane 54 and thus fixing the window pane 54 to the division pillar 92. The material of the division pillar 92 is also moulded onto and fixed to the division bar 74. Further, where the material of the division pillar 92 contacts the upper surface of the leg 64 of the sealing profile 58 at region 98, the material of the division pillar 92 is moulded onto and fixed to the material of the extruded sealing profile 58. Similarly, where the material of the division pillar 92 contacts the outer surface of the wall 66 of the sealing profile 58 the material 92 is moulded and fixed thereto in the region 100.

The steps performed above are preferably performed in the order specified, although the order of steps 1 and 2 may be reversed.

In steps 3 and 4, the window pane 54 may not be placed in the mould and may not be moulded onto the division pillar 92. Instead, the window glass 54 may be fixed to the cross piece by some other means - such as adhesive and/or mechanical interconnection. This fixing of the window glass 54 may be performed after the cross-piece 16 is formed.

The cross-piece 16 formed by the steps has the extruded sealing profile 58 bonded thereto by the moulding process. No gap between the moulded material of the division pillar 92 and the extruded material of the sealing profile 58 will form at regions 98 and 100 because the moulded and extruded materials are bonded (moulded) together. This provides a pleasing visual appearance. Further, such an arrangement serves to securely locate the sealing profile 58 with respect to the division pillar 92 and the division bar 74. It advantageously serves to locate the distal ends of the walls 64,66 of the sealing profile 58 from which the lips 68,70 extend. This may improve the quality of the seal between the lips 68,70 against the window glass 56, thereby reducing noise and moisture ingress.

The thus formed cross-piece 16, optionally with the quarter light window pane 54 attached, may then be connected to other parts of the window seal for the door 8, to be described in more detail below. Also, to be described in more detail below, the cross-piece 16 may be connected to other parts of the window seal during the formation of the division pillar 92.

Both the sealing profile 58 and the division pillar 92 may be formed of the same material: for example either EPDM or TPE. Alternatively, one of these parts may be formed from EPDM, and the other from TPE.

Figure 4 shows a second embodiment of the invention in which the division pillar 92 includes an outer layer 102 of material having a different characteristic to the material of the main part of the division pillar 92. Preferably, the layer 102 is formed of material that is softer than the material of the main part of the division pillar 92. The layer 102 may have a pleasing visual appearance. The layer 102 is moulded onto the main part of the division pillar 92 (and may be formed during the moulding process of the main part of the division pillar 92). The layer 102 is preferably moulded onto the fixed quarter light window pane 54 (if present in the mould) and to the extruded sealing profile 58 at regions 98 and 100. When the layer 102 is moulded onto the sealing profile 58 at regions 98 and 100, the material of the main part of the division pillar 92 may or may not be moulded onto the material of the extruded sealing profile 58 at the regions 98 and 100 (the material of the main part of the division pillar 92 will not be visible where it joins the sealing profile 98 as it is covered by the layer 102).

Although not shown in Figures 3 and 4, engagement lips may be provided on the exterior of walls 64 and 66 of the sealing profile 58 for more securely locating the sealing profile 58 within the division bar 74. However these are not essential.

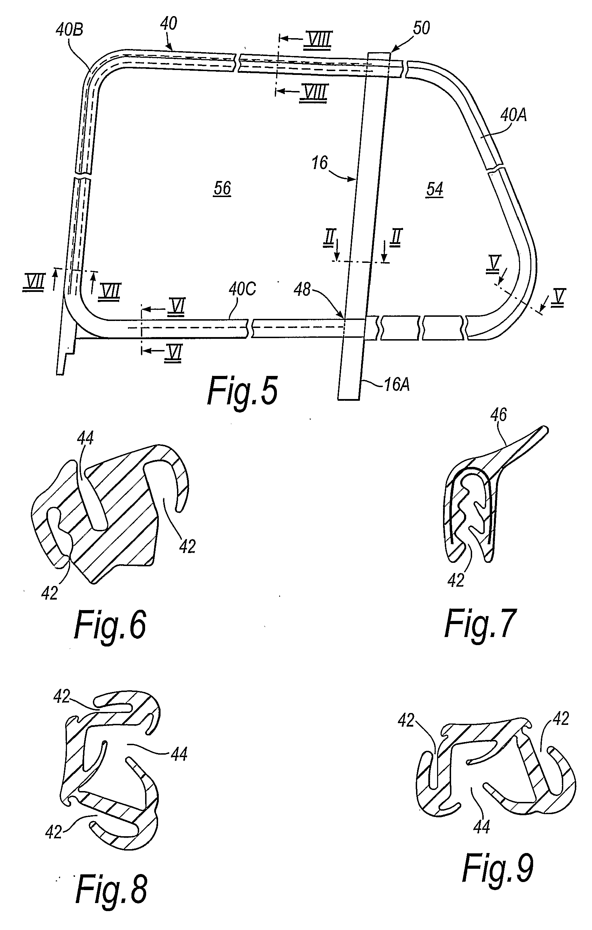

The cross-piece 16 (and similarly the cross-piece 14) may be incorporated into a complete window seal as shown in Figure 5. As shown, the complete window seal 40 comprises a C-pillar glass run part 40A which, together with the cross-piece 16, defines a sealing part for receiving the fixed window pane 54. The C-pillar glass run part 40A is preferably formed by moulding. The C-pillar glass run part 40A may be formed by moulding simultaneously with the formation of the moulded division pillar 92 and/or the outer layer 102 thereof.

Similarly, the window seal 40 has a B-pillar and roof-line glass run part 40B and a waist sealing portion 40C which together with the cross-piece 16 defines a seal for receiving the slidable window pane 56. The seal extends completely around the slidable window pane 56. The B-pillar and roof-line glass run part 40B and the waist sealing portion 40C may be formed by moulding but are preferably formed by extrusion because they advantageously include flocked surfaces which contact the slidable window pane 56. The B-pillar and roof-line glass run part 40B may comprise two separately formed portions: one being the B-pillar glass run part and one being the roof-line glass run part. The B-pillar and roof-line glass run part 40B (or either or both of the aforementioned portions thereof) may be integrally extruded with the extruded sealing profile 58 and/or the waist sealing profile 40C; they may be formed simultaneously in the same extrusion apparatus.

The sectional views of Figures 6 to 9 show the cross-sections of the different parts of the seal 40 which are arranged with channels 42 for locating on metal flanges in the rigid metal window frame carried by the door 8. In addition, channels 44 are defined for receiving the window glass - except for the waist sealing portion 40C. Along this region of the seal 40, there has to be a gap, of course, to enable the window pane 56 to be raised and lowered into and from the hollow part of the door. As shown in Figure 7, along this region 40C of the seal 40, the seal defines a flexible lip 46 for sealingly contacting the side of the window glass 56.

The cross-piece 16 may be inserted into slots at 48 and 50 in the seal 40. It may be fixed in position in one or both of the slots, such as by vulcanisation preferably.

Alternatively, the division pillar 16 may be formed simultaneously with moulding it to any or all of the C-pillar glass run part 40A, the B-pillar and roof- line glass run part 40B and the waist sealing part 40C. For example, the assembled extruded sealing part 58 and division bar 74 may be placed in a mould together with the quarter light fixed window glass 54 (as described above in relation to Figure 3). However, the mould is modified to receive one or more of the seal parts 40A,40B and 40C. When the moulded division pillar 92 is formed it is moulded onto the quarter light fixed window pane 54, the division bar 74 and the extruded sealing profile 58 as described in relation to Figure 3. Further, the moulded material of the division pillar 92 is also (and simultaneously) moulded onto the material of the seal parts in the mould. This advantageously reduces the number of moulding steps required to form the seal 40, and may make the divisions between the parts less visually prominent.

The moulding operation that forms the division pillar 92 may mould the division pillar 92 onto the C-pillar glass run part 40A and the waist sealing part 40C. Such an arrangement may include the quarter light fixed window pane 54.

However, rather than the seal parts 40A,40B and 40C being pre-formed before being placed in the mould with the assembled extruded sealing part 58 and division bar 74, any or all of the sealing parts 40A,40B and 40C may be formed by applying material to the mould so that those parts are formed simultaneously with the division pillar 92 in a single moulding operation.

As shown in Figure 5, the cross-piece 16 has a portion 16A which extends downwardly from the seal 40. This downwardly extending portion 16A helps to guide the slidable window pane 56 as it moves up and down. The portion 16A extends downwardly into the hollow part of the door 8 and may, if desired, be rigidly attached to the interior of the door 8.

The complete or partially complete window seal 40, as shown in Figure 5, pre-fitted with the fixed window glass 54, can be delivered to the vehicle manufacturer in that form. It can then be easily fitted by the vehicle manufacturer into the window frame carried by the door in a single operation, thus reducing assembly costs.

If required a bonding agent, primer or adhesive may be applied between the fixed quarter light window pane 54 and the moulded material of the division pillar 92 and/or layer 102 to improve the bond between the moulded material and the window pane 54. An adhesive, primer or bonding agent may also be applied between the division pillar 92 and the division bar 94. Alternatively, the moulded material may be directly moulded onto the window pane 54 and the division bar 74.

The C pillar glass run part 40A may have the same form (profile) as the roof-line glass run part 40B.

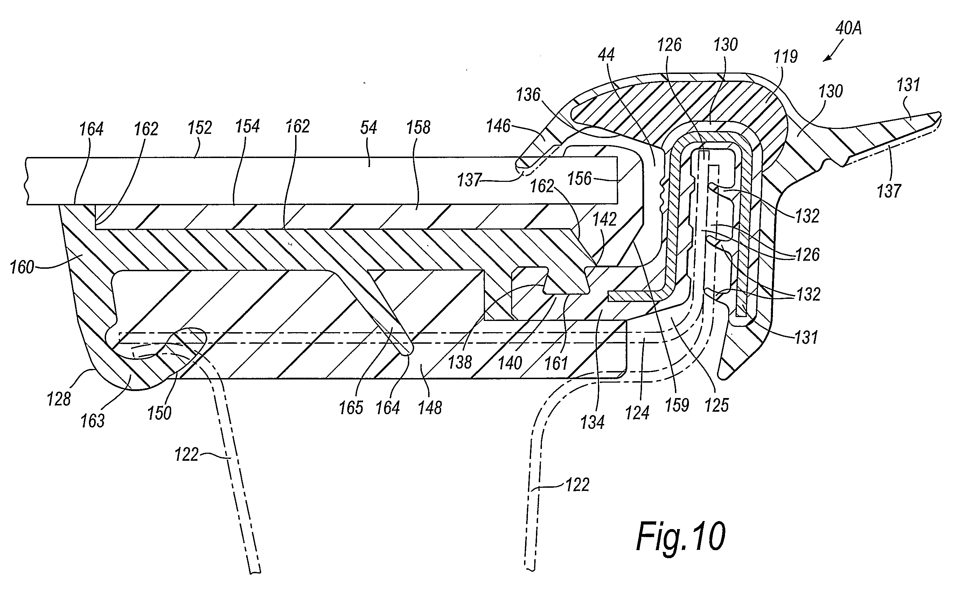

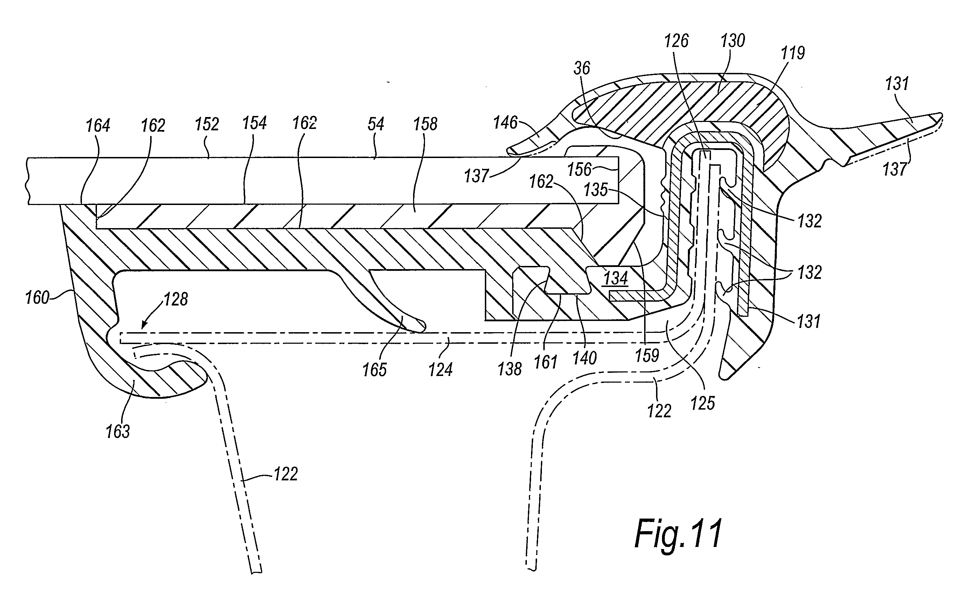

Figures 10 and 11 show an alternative arrangement for the C-pillar glass run part 40A.
A mould 148 on which a sealing part 160 is formed is not present when the sealing assembly is in use.

The sealing strip 130 is typically made of an extruded material such as EPDM material. The strip 130 defines a first U-shaped channel and incorporates a channel shaped reinforcing carrier 131 embedded within the material of the strip during the extrusion process. The carrier 131 may be made of metal and may take any suitable form. It may be in the form of a continuous unapertured metal channel. Instead, it may be slotted or slitted or otherwise apertured to increase its flexibility. In another form, it comprises a series of side-by-side generally U-shaped metal elements defining the channel and either entirely disconnected from each other or connected such as by short integral flexible connecting links. In a further form, the carrier 131 comprises looped wire. Other forms of carrier may also be used.

The strip 130 is extruded to provide gripping means in the form of integral resiliently deformable lips 132 extending inwardly of the channel which help to hold the strip 130 securely in position on the flange 126. Other gripping means may also be used. The gripping force of the lips 132 is assisted by the resilience of the metal carrier. These lips may be extruded so as to be of softer material than the remainder of the extruded material of the sealing strip 130 to increase their frictional grip.

The strip 130 includes the window glass receiving channel 44, formed by first and second respectively opposing walls 134,136 and a base 135. The first wall 134 extends alongside the panel 124 and has a longitudinal recess 138, the recess 138 having a recess base 140 and an open side 142. The recess 138 extends longitudinally along the sealing strip 130, the open side 142 being open to the interior of the window glass receiving channel and being of narrower width than the width of the recess base 140.

The second wall 136 of the window glass receiving channel has a resilient sealing lip 146 extending therefrom inwardly of the window glass receiving channel. The lip 146 is shown in an unstressed position overlapping with the window glass 54 for illustrative purposes.

The sealing strip 130 has an upper part 119 (as shown in the figures and indicated by the cross hatching) which may be formed of relatively hard material. The other parts of the sealing strip 130 are relatively soft, including an upper skin which overlies the upper part 119. The part 119 and the other parts of the sealing strip 130 are integrally extruded. The sealing strip 130 includes resilient sealing lip 131 for engaging the periphery of a rear door opening in the motor vehicle body when the rear door 8 is closed.

The outwardly facing surfaces of the lips 131 and 146 are coated with flock 137. The flock can be formed as part of the extrusion process which forms the strip 130.

The window glass 54 has a first side 152 and a second side 154 joined by an edge 156. The window glass 54 has a part 158, typically made of polypropylene (hereinafter referred to as the PP part), formed (for example, moulded) on a portion of the first side 152 near the edge 156 and extends around the edge 156 to the second side 154. The edge of the window glass 54 is located in the window glass receiving channel. The PP part 158 has a projection 159 extending away from the first side 154 of the window glass 54 towards the first wall 134 of the window glass receiving channel.

A further part 160, typically made of a moulded material such as thermo-plastic polyester elastomer material (referred to hereinafter as the TPE part), is formed (for example, moulded) on the PP part 158 at 162 and on the window glass at 164. The TPE part 160 is shaped by the surface of the mould 148 to form a clamping lip 163, which extends around flange 128 and is shown undeformed and overlapping with the flange 128 for illustrative purposes.

In use, the sealing strip 130 is mounted in position on the flange 126 by positioning the strip 130 so that the flange 126 engages in the U shaped channel and the clamping lip 163 is located to extend around the second flange 126. The strip 130 firmly grips the second flange 126 with the lips 132.

The resilient sealing lip 146 closes a gap between the PP part 158 at the first side 152 of the window glass 54 to prevent the ingress of moisture into the window glass receiving channel.

The sealing assembly is made by a method including the following steps: the sealing strip 130 is formed in an extrusion process; the PP part 158 is formed (moulded) onto the window glass 54, the window glass, or at least the portion of the window glass with the PP part 158 formed thereon is placed in the mould 148 together with the already formed sealing strip 130; the TPE part 160 is moulded in the mould 148 so as to join it to the sealing strip 130, the PP part 158 along join 162 and the window glass along join 164. The TPE part 160 bonds to the PP part 158 and the window glass 54. The TPE part 160 partially forms in the recess 138 to form the protrusion 161. The protrusion 161 forms in a shape corresponding to the shape of the recess 138. Due to the shape of the recess 138, as described above, the protrusion 161 is secured in the recess 138 and the TPE part 160 is thereby secured to the sealing strip 130. The TPE part 160 is therefore mechanically interlocked with the sealing strip 130. The window glass 54 is thereby secured to the sealing assembly.

It is not essential for the TPE part 160 to bond to the window glass 54 - the TPE part 160 could only bond to the PP part 158.

The roof-line glass run part 40B may have a similar configuration to the C-pillar glass run part 40A shown in Figure 10.

A mould 148 has a middle channel 164 and the TPE part 160 is formed to have a TPE projection 165 corresponding in shape to the shape of the middle channel 164. The projection 165 is shown shaped as moulded and overlapping the panel 122 for illustrative purposes only. The mould 148 is absent in use. The panels 122,122 are shaped as shown to form first and second flanges 126,128 having perpendicularly extending planes.

In use, the sealing assembly is mounted on the flange 126. The projection 165 resiliently presses against the panel 122, as shown in Figure 11.

Figure 11 shows a second example of the embodiment described with reference to Figure 10 with the mould 148 removed. The clamping lip 163, resilient sealing lips 132 and TPE projection 161 are shown defomed in their respective in use positions pressing respectively against the panel 122, the flange 128 and the panel 124.

The relatively hard material of the division pillar 92 may have a Shore D-hardness of 40. The softer material of the layer 102 may have a Shore A-hardness of 60. The material selected for the hard material of the division pillar 92 may be polypropylene and the material for the relatively soft layer 102 may be TPE (thermoplastic elastomer). Alternatively, the relatively hard and/or the relatively soft material could be formed from plastics or PVC (polyvinyl chloride).

## Claims

1. A sealing, guiding or trimming assembly for sealing a closure member (56), the assembly including an unreinforced extruded part (58) for sealing against a surface of the closure member (56) and having a base (60) with first (64) and second (66) walls extending from said base (60); a reinforcing member (74) in which said extruded part (58) is at least partially accommodated; and a moulded part (92) moulded at least partially over said reinforcing member (74), **characterised in that** the moulded part (92) is moulded onto said extruded part (58) to define a first region (98) where said moulded part (92) contacts said first side wall (64) and a second region (100) where said moulded part (92) contacts said second side wall (66).

2. The assembly of claim 1, wherein the extruded part (58) defines a channel (53) in which an edge of the closure member (56) is received.

3. The assembly of claim 2, in which the channel (53) includes at least one lip (62, 68, 70) extending thereinto for sealing against the surface of the closure member (56).

4. The assembly of claim 3, wherein the or each lip includes a flocked surface (72) for contacting the closure member.

5. The assembly of claim 2, 3, or 4, wherein the closure member (56) is slidably received in the channel (53).

6. The assembly of claim 1, 2, 3, 4, or 5, in which the moulded part (92) is moulded over the exterior of the channel of the reinforcing member (74).

7. The assembly of any one of claims 1 to 6, in which the moulded part (92) includes a formation (52) for sealing against a further closure member (54).

8. The assembly of claim 7, in which the formation (52) is fixed to the further closure member (54).

9. The assembly of claim 8, in which the formation (52) is moulded to the closure member (54).

10. The assembly of any one of claims 1 to 9, in which the moulded part (92) includes an outer layer (94) of relatively soft material.

11. The assembly of claim 10, in which the relatively soft material (94) is moulded over relatively hard material of the moulded part (92).

12. The assembly of claim 11, in which the relatively hard material is moulded to the extruded part (58).

13. The assembly of claim 10, 11, or 12, in which the relatively soft material (94) is moulded to the extruded part (58).

14. A vehicle door including a slidable closure member, a fixed closure member and the assembly of any one of claims 1 to 13, wherein the assembly extends between the slidable closure member and the fixed closure member.

15. The vehicle door or assembly of any one of claims 1 to 14, in which the or each closure member comprises a window pane.

16. A sealing, guiding or trimming arrangement for sealing against a fixed closure member and a slidable closure member mounted in a vehicle door, including the assembly of any one of claims 1 to 13 and at least one further sealing assembly for sealing around the slidable and/or fixed closure members.

17. The arrangement of claim 16, in which the or each further sealing assembly is mounted onto said assembly.

18. A sealing, guiding or trimming arrangement for sealing against a fixed closure member and a slidable closure member mounted in a vehicle door, including the assembly of any one of claims 1 to 13 and a further sealing assembly for sealing around the fixed closure member and which is formed as a unit with said assembly.

19. The arrangement of claim 18, wherein said further sealing assembly and the moulded part of said assembly are integrally formed simultaneously by a moulding operation.

20. A sealing, guiding or trimming arrangement for sealing against a fixed closure member and a slidable closure member mounted in a vehicle door, including the assembly of any one of claims 1 to 13 and a further sealing assembly for sealing completely around the periphery of the slidable closure member and which is formed as a unit with said assembly.

21. The arrangement of claim 20, wherein said further assembly is at least partly formed by extrusion.

22. The arrangement of claim 20 or 21, in which said further assembly and said assembly are moulded together.

23. A sealing, guiding or trimming arrangement for sealing against a fixed closure member and a slidable closure member mounted in a vehicle door, including the assembly of any one of claims 1 to 13 and a further sealing assembly for sealing around the slidable closure member and which is extruded simultaneously with said extruded part.

24. A method of forming a sealing, guiding or trimming assembly for sealing a closure member (56), the method including providing an unreinforced extruded part (58) for sealing against a surface of the closure member (56) and having a base (60) with first (64) and second (66) walls extending from said base (60); providing a reinforcing member (74); mounting the extruded part (58) in the reinforcing member (74); and moulding a moulded part (92) at least partially over the reinforcing member (74), **characterised in that** the moulded part (92) is moulded onto the extruded part (58) which defines a first region (98) where said moulded part (92) contacts said first side wall (64) and a second region (100) where said moulded part (92) contacts said second side wall (66).

25. The method of claim 24, further including forming the extruded part.

26. The method of claims 24 or 25, including forming the reinforcing member.

27. The method of claim 24, 25, or 26, wherein the extruded part defines a channel in which an edge of the closure member is received.

28. The method of claim 27, in which the channel includes at least one lip extending thereinto for sealing against the surface of the closure member.

29. The method of claim 28, in which the or each lip includes a flocked surface for contacting the closure member.

30. The method of claim 27, 28, or 29, wherein the channel is formed to slidably receive the closure member.

31. The method of claim 24, 25, 26, 27, 28, 29, or 30, in which the moulded part is moulded over the exterior of the channel of the reinforcing member.

32. The method of any one of claims 24 to 31, in which the moulded part includes a formation for sealing against a further closure member.

33. The method of claim 32, in which the formation is fixed to the further closure member.

34. The method of claim 33, in which the formation is moulded to the further closure member.

35. The method of any one of claims 24 to 34, including forming the moulded part with an outer layer of relatively soft material.

36. The method of claim 35, in which the relatively soft material is moulded over relatively hard material of the moulded part.

37. The method of claim 36, in which the relatively hard material is moulded to the extruded part.

38. The method of claim 35, 36, or 37, in which the relatively soft material is moulded to the extruded part.

39. The method of any one of claims 32 to 38, including forming a further sealing assembly for sealing around the further closure member simultaneously with and integrally with the moulded part of said assembly.

40. The method of any one of claims 32 to 38, including forming a further sealing assembly, for sealing completely around the periphery of said closure member, as a unit with said assembly.

41. The method of claim 40, wherein said further assembly is formed at least partly by extrusion.

42. The method of claim 40 or 41, including moulding said further sealing assembly and said sealing assembly together.

43. The method of any one of claims 34 to 38, including extruding a further sealing assembly, for sealing around said closure member simultaneously with said extruded part.

44. The assembly of claim 1 wherein the closure member (56) is a second window pane (56) and the base (60), the first wall (64), and the second wall (66) define a second channel (53) for receiving edges of the second window pane (56), and wherein the moulded part (92) comprises a central longitudinally extending portion from which integrally extend in perpendicular directions first and second side wall portions defining a first channel (52) facing in a direction opposite from said second channel (53), the first channel (52) for receiving the edges of a first window pane (54).

## Patentansprüche

1. Dichtungs-, Führungs- oder Abgleichbaugruppe zum Abdichten eines Schließelements (56), wobei die Baugruppe Folgendes beinhaltet: ein nicht verstärktes extrudiertes Teil (58) zum Abdichten an einer Fläche des Schließelements (56), das eine Basis (60) mit einer ersten (64) und zweiten (66) Wand aufweist, die sich von der Basis (60) erstrecken; ein Verstärkungselement (74), in dem das extrudierte Teil (58) wenigstens teilweise aufgenommen ist; und ein geformtes Teil (92), das wenigstens teilweise über das Verstärkungselement (74) geformt ist, **dadurch gekennzeichnet, dass** das geformte Teil (92) auf das extrudierte Teil (58) geformt ist, um eine erste Region (98), in der das geformte Teil (92) in Kontakt mit der ersten Seitenwand (64) steht, und eine zweite Region (100) zu definieren, in der das geformte Teil (92) in Kontakt mit der zweiten Seitenwand (66) steht.

2. Baugruppe nach Anspruch 1, wobei das extrudierte Teil (58) einen Kanal (53) definiert, in dem eine Kante des Schließelements (56) aufgenommen ist.

3. Baugruppe nach Anspruch 2, wobei der Kanal (53) wenigstens eine Lippe (62, 68, 70) beinhaltet, die sich darin erstreckt, um an der Fläche des Schließelements (56) abzudichten.

4. Baugruppe nach Anspruch 3, wobei die oder jede Lippe eine beflockte Fläche (72) beinhaltet, um in Kontakt mit dem Schließelement zu treten.

5. Baugruppe nach Anspruch 2, 3 oder 4, wobei das Schließelement (56) verschiebbar im Kanal (53) aufgenommen ist.

6. Baugruppe nach Anspruch 1, 2, 3, 4 oder 5, wobei das geformte Teil (92) über das Äußere des Kanals des Verstärkungselements (74) geformt ist.

7. Baugruppe nach einem der Ansprüche 1 bis 6, wobei das geformte Teil (92) eine Formation (52) zum Abdichten an einem weiteren Schließelement (54) beinhaltet.

8. Baugruppe nach Anspruch 7, wobei die Formation (52) an dem weiteren Schließelement (54) fixiert ist.

9. Baugruppe nach Anspruch 8, wobei die Formation (52) an das Schließelement (54) angeformt ist.

10. Baugruppe nach einem der Ansprüche 1 bis 9, wobei das geformte Teil (92) eine Außenschicht (94) aus relativ weichem Material beinhaltet.

11. Baugruppe nach Anspruch 10, wobei das relativ weiche Material (94) über das relativ harte Material des geformten Teils (92) geformt ist.

12. Baugruppe nach Anspruch 11, wobei das relativ harte Material an das extrudierte Teil (58) angeformt ist.

13. Baugruppe nach Anspruch 10, 11 oder 12, wobei das relativ weiche Material (94) an das extrudierte Teil (58) angeformt ist.

14. Fahrzeugtür mit einem verschiebbaren Schließelement, einem fixierten Schließelement und der Baugruppe nach einem der Ansprüche 1 bis 13, wobei sich die Baugruppe zwischen dem verschiebbaren Schließelement und dem fixierten Schließelement erstreckt.

15. Fahrzeugtür oder Baugruppe nach einem der Ansprüche 1 bis 14, wobei das oder jedes Schließelement eine Fensterscheibe umfasst.

16. Dichtungs-, Führungs- oder Abgleichanordnung zum Abdichten an einem fixierten Schließelement und einem verschiebbaren Schließelement, die in einer Fahrzeugtür angebracht ist, beinhaltend die Baugruppe nach einem der Ansprüche 1 bis 13 und wenigstens eine weitere Dichtungsbaugruppe zum Abdichten um das verschiebbare und/oder fixierte Schließelement.

17. Anordnung nach Anspruch 16, wobei die oder jede weitere Dichtungsbaugruppe an der Baugruppe angebracht ist.

18. Dichtungs-, Führungs- oder Abgleichanordnung zum Abdichten an einem fixierten Schließelement und einem verschiebbaren Schließelement, die in einer Fahrzeugtür angebracht ist, beinhaltend die Baugruppe nach einem der Ansprüche 1 bis 13 und eine weitere Dichtungsbaugruppe zum Abdichten um das fixierte Schließelement, die als Einheit mit der Baugruppe gebildet ist.

19. Anordnung nach Anspruch 18, wobei die weitere Dichtungsbaugruppe und das geformte Teil der Baugruppe durch einen Formvorgang gleichzeitig einstückig gebildet werden.

20. Dichtungs-, Führungs- oder Abgleichanordnung zum Abdichten an einem fixierten Schließelement und einem verschiebbaren Schließelement, die in einer Fahrzeugtür angebracht ist, beinhaltend die Baugruppe nach einem der Ansprüche 1 bis 13 und eine weitere Dichtungsbaugruppe zum vollständigen Abdichten um den Umfang des verschiebbaren Schließelements, die als Einheit mit der Baugruppe gebildet ist.

21. Anordnung nach Anspruch 20, wobei die weitere Baugruppe wenigstens teilweise mittels Extrusion gebildet ist.

22. Anordnung nach Anspruch 20 oder 21, wobei die weitere Baugruppe und die Baugruppe aneinander angeformt sind.

23. Dichtungs-, Führungs- oder Abgleichanordnung zum Abdichten an einem fixierten Schließelement und einem verschiebbaren Schließelement, die in einer Fahrzeugtür angebracht ist, beinhaltend die Baugruppe nach einem der Ansprüche 1 bis 13 und eine weitere Dichtungsbaugruppe zum Abdichten um das verschiebbare Schließelement, die gleichzeitig mit dem extrudierten Teil extrudiert wird.

24. Verfahren zum Bilden einer Dichtungs-, Führungs- oder Abgleichbaugruppe zum Abdichten eines Schließelements (56), wobei das Verfahren Folgendes beinhaltet: Bereitstellen eines nicht verstärkten extrudierten Teils (58) zum Abdichten an einer Fläche des Schließelements (56), das eine Basis (60) mit einer ersten (64) und zweiten (66) Wand aufweist, die sich von der Basis (60) erstrecken; Bereitstellen eines Verstärkungselements (74); Anbringen des extrudierten Teils (58) in dem Verstärkungselement (74); und Formen eines geformten Teils (92) wenigstens teilweise über das Verstärkungselement (74), **dadurch gekennzeichnet, dass** das geformte Teil (92) auf das extrudierte Teil (58) geformt wird, der eine erste Region (98), in der das geformte Teil (92) in Kontakt mit der ersten Seitenwand (64) steht, und eine zweite Region (100) definiert, in der das geformte Teil (92) in Kontakt mit der zweiten Seitenwand (66) stehet.

25. Verfahren nach Anspruch 24, ferner beinhaltend Bilden des extrudierten Teils.

26. Verfahren nach Anspruchs 24 oder 25, beinhaltend Bilden des Verstärkungselements.

27. Verfahren nach Anspruch 24, 25 oder 26, wobei das extrudierte Teil einen Kanal definiert, in dem eine Kante des Schließelements aufgenommen ist.

28. Verfahren nach Anspruch 27, wobei der Kanal wenigstens eine Lippe beinhaltet, die sich darin erstreckt, um an der Fläche des Schließelements abzudichten.

29. Verfahren nach Anspruch 28, wobei die oder jede Lippe eine beflockte Fläche beinhaltet, um in Kontakt mit dem Schließelement zu treten.

30. Verfahren nach Anspruch 27, 28 oder 29, wobei der Kanal dazu gebildet wird, das Schließelement verschiebbar aufzunehmen.

31. Verfahren nach Anspruch 24, 25, 26, 27, 28, 29 oder 30, wobei das geformte Teil über das Äußere des Kanals des Verstärkungselements geformt wird.

32. Verfahren nach einem der Ansprüche 24 bis 31, wobei das geformte Teil eine Formation zum Abdichten an einem weiteren Schließelement beinhaltet.

33. Verfahren nach Anspruch 32, wobei die Formation an dem weiteren Schließelement fixiert wird.

34. Verfahren nach Anspruch 33, wobei die Formation an das weitere Schließelement angeformt wird.

35. Verfahren nach einem der Ansprüche 24 bis 34, beinhaltend Bilden des geformten Teils mit einer Außenschicht aus relativ weichem Material.

36. Verfahren nach Anspruch 35, wobei das relativ weiche Material über das relativ harte Material des geformten Teils geformt wird.

37. Verfahren nach Anspruch 36, wobei das relativ harte Material an das extrudierte Teil angeformt wird.

38. Verfahren nach Anspruch 35, 36 oder 37, wobei das relativ weiche Material an das extrudierte Teil angeformt wird.

39. Verfahren nach einem der Ansprüche 32 bis 38, beinhaltend Bilden einer weiteren Dichtungsbaugruppe zum Abdichten um das weitere Schließelement gleichzeitig mit und einstückig mit dem geformten Teil der Baugruppe.

40. Verfahren nach einem der Ansprüche 32 bis 38, beinhaltend Bilden einer weiteren Dichtungsbaugruppe zum vollständigen Abdichten um den Umfang des Schließelements als Einheit mit der Baugruppe.

41. Verfahren nach Anspruch 40, wobei die weitere Baugruppe wenigstens teilweise mittels Extrusion gebildet wird.

42. Verfahren nach Anspruch 40 oder 41, beinhaltend gemeinsames Formen der weiteren Dichtungsbaugruppe und der Dichtungsbaugruppe.

43. Verfahren nach einem der Ansprüche 34 bis 38, beinhaltend Extrudieren einer weiteren Dichtungsbaugruppe zum Abdichten um das Schließelement gleichzeitig mit dem extrudierten Teil.

44. Baugruppe nach Anspruch 1, wobei das Schließelement (56) eine zweite Fensterscheibe (56) ist und die Basis (60), die erste Wand (64) und die zweite Wand (66) einen zweiten Kanal (53) zum Aufnehmen von Kanten der zweiten Fensterscheibe (56) definieren, und wobei das geformte Teil (92) einen sich zentral in Längsrichtung erstreckenden Abschnitt umfasst, von dem sich in lotrechten Richtungen einstückig ein erster und zweiter Seitenwandabschnitt erstrecken, die einen ersten Kanal (52) definieren, der in eine Richtung entgegengesetzt zum zweiten Kanal (53) gerichtet ist, wobei der erste Kanal (52) dazu dient, die Kanten einer ersten Fensterscheibe (54) aufzunehmen.

## Revendications

1. Assemblage d'étanchéité, de guidage ou de garniture pour rendre étanche un élément de fermeture (56), l'assemblage comprenant une partie extrudée non renforcée (58) pour assurer l'étanchéité contre une surface de l'élément de fermeture (56) et composée d'une base (60) avec des première (64) et deuxième (66) parois se prolongeant à partir de ladite base (60) ; un élément de renfort (74) dans lequel ladite partie extrudée (58) est au moins partiellement accueillie ; et une partie moulée (92) moulée au moins partiellement par-dessus ledit élément de renfort (74), **caractérisée en ce que** la partie moulée (92) est moulée sur ladite partie extrudée (58) pour définir une première zone (98) où ladite partie moulée (92) entre en contact avec ladite première paroi (64) et une deuxième zone (100) où ladite partie moulée (92) entre en contact avec ladite deuxième paroi (66).

2. Assemblage selon la revendication 1, dans lequel la partie extrudée (58) définit un canal (53) dans lequel un bord de l'élément de fermeture (56) est accueilli.

3. Assemblage selon la revendication 2, dans lequel le canal (53) comprend au moins une lèvre (62, 68, 70) se prolongeant à l'intérieur de celui-ci pour assurer l'étanchéité contre la surface de l'élément de fermeture (56).

4. Assemblage selon la revendication 3, dans lequel la ou chaque lèvre comprend une surface floquée (72) destinée à entrer en contact avec l'élément de fermeture.

5. Assemblage selon la revendication 2, 3 ou 4, dans lequel l'élément de fermeture (56) est reçu dans le canal (53) de façon coulissante.

6. Assemblage selon la revendication 1, 2, 3, 4 ou 5, dans lequel la partie moulée (92) est moulée par-dessus l'extérieur du canal de l'élément de renfort (74).

7. Assemblage selon l'une quelconque des revendications 1 à 6, dans lequel la partie moulée (92) comprend une formation (52) pour assurer l'étanchéité contre un autre élément de fermeture (54).

8. Assemblage selon la revendication 7, dans lequel la formation (52) est fixée à l'autre élément de fermeture (54).

9. Assemblage selon la revendication 8, dans lequel la formation (52) est moulée sur l'élément de fermeture (54).

10. Assemblage selon l'une quelconque des revendications 1 à 9, dans lequel la partie moulée (92) comprend une couche extérieure (94) constituée d'un matériau relativement souple.

11. Assemblage selon la revendication 10, dans lequel le matériau relativement souple (94) est moulé par-dessus le matériau relativement dur de la partie moulée (92).

12. Assemblage selon la revendication 11, dans lequel le matériau relativement dur est moulé sur la partie extrudée (58).

13. Assemblage selon la revendication 10, 11 ou 12, dans lequel le matériau relativement souple (94) est moulé sur la partie extrudée (58).

14. Porte de véhicule comprenant un élément de fermeture coulissant, élément de fermeture fixe et assemblage selon l'une quelconque des revendications 1 à 13, dans lequel l'assemblage s'étend entre l'élément de fermeture coulissant et l'élément de fermeture fixe.

15. Porte du véhicule ou assemblage selon l'une quelconque des revendications 1 à 14, dans lequel le ou chaque élément de fermeture comprend une vitre.

16. Dispositif d'étanchéité, de guidage ou de garniture pour assurer l'étanchéité contre un élément de fermeture fixe et un élément de fermeture coulissant monté dans une porte de véhicule, y compris l'assemblage selon l'une quelconque des revendications 1 à 13 et au moins un autre assemblage d'étanchéité pour assurer l'étanchéité autour des éléments de fermeture coulissants et/ou fixes.

17. Dispositif selon la revendication 16, dans lequel le ou chaque autre assemblage d'étanchéité est monté sur ledit assemblage.

18. Dispositif d'étanchéité, de guidage ou de garniture pour assurer l'étanchéité contre un élément de fermeture fixe et un élément de fermeture coulissant monté dans une porte de véhicule, y compris l'assemblage selon l'une quelconque des revendications 1 à 13 et un autre assemblage d'étanchéité pour assurer l'étanchéité autour d'un élément de fermeture fixe et qui constitue une unité avec ledit assemblage.

19. Dispositif selon la revendication 18, dans lequel ledit autre assemblage d'étanchéité et la partie moulée dudit assemblage sont formés de façon intégrée simultanément par une opération de moulage.

20. Dispositif d'étanchéité, de guidage ou de garniture pour assurer l'étanchéité contre un élément de fermeture fixe et un élément de fermeture coulissant monté dans une porte de voiture, y compris l'assemblage selon l'une quelconque des revendications 1 à 13 et un autre assemblage d'étanchéité pour assurer l'étanchéité complète autour de la périphérie de l'élément de fermeture coulissant et qui est formé en tant qu'unité avec ledit assemblage.

21. Dispositif selon la revendication 20, dans lequel ledit autre assemblage est au moins partiellement formé par extrusion.

22. Dispositif selon la revendication 20 ou 21, dans lequel ledit autre assemblage et ledit assemblage sont moulés ensemble.

23. Dispositif d'étanchéité, de guidage ou de garniture pour assurer l'étanchéité contre un élément de fermeture fixe et un élément de fermeture coulissant montés dans une porte de véhicule, y compris l'assemblage selon l'une quelconque des revendications 1 à 13 et un autre assemblage d'étanchéité pour assurer l'étanchéité autour de l'élément de fermeture coulissant et qui est extrudé simultanément avec ladite partie extrudée.

24. Procédé pour former un assemblage d'étanchéité, de guidage ou de garniture pour assurer l'étanchéité d'un élément de fermeture (56), ce procédé comprenant la fourniture d'une partie extrudée non renforcée (58) pour assurer l'étanchéité contre une surface de l'élément de fermeture (56) et ayant une base (60) avec des première (64) et deuxième (66) parois se prolongeant à partir de ladite base (60) ; fournissant un élément de renfort (74) ; la partie extrudée (58) étant montée dans l'élément de renfort (74) ; et moulant une partie moulée (92) au moins partiellement par-dessus l'élément de renfort (74), **caractérisée en ce que** la partie moulée (92) est moulée sur la partie extrudée (58) qui définit une première zone (98) au niveau de laquelle ladite partie moulée (92) est en contact avec ladite première paroi latérale (64) et une deuxième zone (100) où ladite partie moulée (92) entre en contact avec ladite deuxième partie latérale (66).

25. Procédé selon la revendication 24, comprenant en outre la formation de la partie extrudée.

26. Procédé selon la revendication 24 ou 25, comprenant la formation de l'élément de renfort.

27. Procédé selon la revendication 24, 25 ou 26, selon lequel la partie extrudée définit un canal dans lequel un bord de l'élément de fermeture est accueilli.

28. Procédé selon la revendication 27, dans lequel le canal comprend au moins une lèvre se prolongeant à l'intérieur de ce dernier pour assurer l'étanchéité contre la surface de l'élément de fermeture.

29. Procédé selon la revendication 28, dans lequel la ou chaque lèvre comprend une surface floquée qui entre en contact avec l'élément de fermeture.

30. Procédé selon la revendication 27, 28 ou 29, dans lequel le canal est formé pour accueillir de manière coulissante l'élément de fermeture.

31. Procédé selon la revendication 24, 25, 26, 27, 28, 29 ou 30, dans lequel la partie moulée est moulée par-dessus l'extérieur du canal de l'élément de renfort.

32. Procédé selon l'une quelconque des revendications 24 à 31, dans lequel la partie moulée comprend une formation pour assurer l'étanchéité contre un autre élément de fermeture.

33. Procédé selon la revendication 32, dans lequel la formation est fixée à l'autre élément de fermeture.

34. Procédé selon la revendication 33, dans lequel la formation est moulée sur l'autre élément de fermeture.

35. Procédé selon l'une quelconque des revendications 24 à 34, comprenant la formation de la partie moulée avec une couche extérieure de matériau relativement souple.

36. Procédé selon la revendication 35, dans lequel le matériau relativement souple est moulé par-dessus le matériau relativement dur de la partie moulée.

37. Procédé selon la revendication 36, dans lequel le matériau relativement dur est moulé sur la partie extrudée.

38. Procédé selon la revendication 35, 36 ou 37, dans lequel le matériau relativement souple est moulé sur la partie extrudée.

39. Procédé selon l'une quelconque des revendications 32 à 38, comprenant la formation d'un autre assemblage d'étanchéité pour assurer l'étanchéité autour de l'autre élément de fermeture simultanément avec et intégralement avec la partie moulée dudit assemblage.

40. Procédé selon l'une quelconque des revendications 32 à 38, comprenant la formation d'un autre assemblage d'étanchéité, pour assurer l'étanchéité complète autour de la périphérie dudit élément de fermeture, en tant qu'unité avec ledit assemblage.

41. Procédé selon la revendication 40, dans lequel ledit autre assemblage est formé au moins partiellement par extrusion.

42. Procédé selon la revendication 40 ou 41, comprenant le moulage dudit autre assemblage d'étanchéité et dudit assemblage d'étanchéité ensemble.

43. Procédé selon l'une quelconque des revendications 34 à 38, comprenant l'extrusion d'un autre assemblage d'étanchéité pour assurer l'étanchéité autour dudit élément de fermeture simultanément avec ladite partie extrudée.

44. Assemblage selon la revendication 1, dans lequel l'élément de fermeture (56) est une deuxième vitre (56) et la base (60), la première paroi (64) et la deuxième paroi (66) définissent un deuxième canal (53) qui accueille les bords de la deuxième vitre (56), et dans lequel la partie moulée (92) comprend une portion s'étendant de manière longitudinale au centre à partir de laquelle s'étendent de manière intégrale dans des directions perpendiculaires les première et deuxième portions de parois latérales définissant un premier canal (52) se faisant face dans une direction contraire au dit deuxième canal (53), le premier canal (52) étant destiné à accueillir les bords d'une première vitre (54).
